# EUROPEAN PATENT SPECIFICATION

(11) **EP 1 780 123 B1**
(45) Date of publication and mention of the grant of the patent: **24.08.2011**
(21) Application number: 06076917.1
(22) Date of filing: 23.10.2006
(51) Int. Cl.: B64D 39/04, F16L 55/02

(54) **Systems and methods for reducing surge loads in hose assemblies, including aircraft refueling hose assemblies**
Systeme und Verfahren zur Reduzierung von Belastungen durch Druckspitzen in Schläuchen, einschliesslich Flugzeugbetankungsschläuche
Systèmes et procédés pour réduire des charges provenant de chocs de pression dans des tuyaux, y compris des tuyaux pour le ravitaillement d'avions

(30) Priority: 26.10.2005 US 258819
(43) Date of publication of application: 02.05.2007
(73) Proprietor: The Boeing Company, Chicago IL 66066-2016 (US)
(72) Inventor: Cutler, Theron L., Wichita KS 67205 (US); Shelly, Mark A., Bel Aire, KS 67226 (US)
(74) Representative: Land, Addick Adrianus Gosling

(56) References cited:
- GB-A- 2 228 771
- US-A- 2 852 216
- US-A- 3 665 967

## Description

### TECHNICAL FIELD

The present invention is directed generally toward reducing surge loads in hose assemblies used in systems for in-flight refueling of aircraft.

### BACKGROUND

In-flight refueling (or air-to-air refueling) is an important method for extending the range of aircraft traveling long distances over areas having no feasible landing or refueling points. Although in-flight refueling is a relatively common operation, especially for military aircraft, the aircraft to be refueled (e.g., the receiver aircraft) must be precisely positioned relative to the tanker aircraft in order to provide safe engagement while the fuel is dispensed to the receiver aircraft. The requirement for precise relative spatial positioning of the two rapidly moving aircraft makes in-flight refueling a challenging operation.

There are currently two primary systems for in-flight refueling. One is a hose and drogue system, which includes a refueling hose having a drogue disposed at one end. The hose and drogue are trailed behind the tanker aircraft once the tanker aircraft is on station. The pilot of the receiver aircraft then flies the receiver aircraft to intercept and couple with the drogue for refueling. Another existing system is a boom refueling system. The boom refueling system typically includes a rigid boom extending from the tanker aircraft with a probe and nozzle at the distal end. The boom also includes airfoils controlled by a boom operator stationed on the refueling aircraft. The airfoils allow the boom operator to actively maneuver the boom with respect to the receiver aircraft, which flies in a fixed refueling position below and aft of the tanker aircraft.

One challenge associated with in-flight refueling systems includes surge loads generated during the refueling process. For example, high surge pressures can be generated in the refueling hose by any sudden or rapid changes in the flow rate of fuel passing through the refueling hose (e.g., starting or stopping the fuel flow, increasing or decreasing the fuel flow, etc.) The sudden changes in flow rate can in turn cause surge loads or surge pulses in the system, which can travel up the refueling hose and back into the tanker aircraft fuel system. In some instances, the surge loads can damage the various components of the fuel system (e.g., pumps, tanks, plumbing, etc.) and/or other aircraft systems or components. One approach for damping or otherwise suppressing such surge loads is to use surge suppressors positioned within the aircraft at various locations along the fuel system to intercept the surge loads. Conventional surge suppressors can include, for example, one or more canisters having bladders or other types of suppression areas positioned to absorb at least a portion of the surge loads before the loads can potentially damage the various systems of the aircraft.

One drawback with conventional surge suppressors, however, is that they are typically not designed for the large surge loads generated during in-flight refueling operations. Most surge suppressors are only configured to handle the relatively small surge loads generated during ground refueling operations, rather than the large surge loads that can be generated during in-flight refueling operations. Another drawback with conventional surge suppressors is that the bladders need to be filled or "charged" with nitrogen or another suitable gas both before and during use. The charging process can be time-consuming and inefficient, and can create a requirement for additional hardware on the aircraft (e.g., pumps, tanks, plumbing, etc.) Still another drawback with conventional surge suppressors is that the performance of the suppressors can change significantly based on the operating conditions of the aircraft. For example, the gas in the bladder can be affected by changes in temperature and/or pressure as the aircraft is in flight. Such changes can negatively affect the performance of the surge suppressor, particularly during in-flight refueling operations when the generated surge loads can be relatively large.

GB 2 2228 771 describes an aerial refueling system comprising an aircraft, wherein the aircraft includes a tanker aircraft, and a fuel delivery device carried by the tanker aircraft, wherein the fuel delivery device includes a flexible fuel line as deployable portion configured to be deployed overboard an aircraft during aerial refueling, according to the preamble of claim 1. In particular, GB 2 228 771 describes a double-walled tubular bladder contained in a tubular casing mounted between sections of a fuel line.

US 3,665,967 describes a conduit for use in fluid, conducting systems which are subjected to pressure surges and includes an inner conduit for carrying fluid which is surrounded by a body of resilient material adapted to absorb undulations of the inner conduit in response to pressure surges of the fluid.

Accordingly, there is a need to improve the systems and methods for suppressing or otherwise reducing surge loads in hose assemblies.

### SUMMARY

In order to meet that need, the aerial refueling system according to claim 1 is defined.

The surge damping portion includes a compressible material disposed annularly about at least a portion of the fuel line. The compressible material can include, for example, solid rubber, foam rubber, silicone rubber, a foam material such as closed-cell foam or other suitable types of foam, or other suitable materials having a desired damping characteristic. In further embodiments, the system can include a plurality of surge damping portions positioned along the fuel line away from the aircraft.

A method for refueling an aircraft according to claim 5 in accordance with another aspect of the invention can include aerially deploying from a tanker aircraft a portion of a refueling system that includes a flexible fuel line and a drogue. The method further includes suppressing surge loads traveling along the fuel line using a surge damping portion positioned along at least a portion of the fuel line away from the tanker aircraft. Suppressing surge loads traveling along the fuel line includes transferring energy from radially expanding surge loads into a compressible material disposed annularly about at least a portion of the fuel line.

### BRIEF DESCRIPTION OF THE DRAWINGS

Figure 1 is a partially schematic, isometric illustration of a tanker aircraft having an aerial refueling device including a surge damping portion configured in accordance with several embodiments of the invention.

Figure 2A is an enlarged, partially schematic side cross-sectional view of a portion of a hose assembly of the aerial refueling device and the surge damping portion shown in Figure 1.

Figure 2B is a cross-sectional view of the hose assembly and the surge damping portion taken along line 2B-2B of Figure 2A.

Figures 3A-3C are enlarged, partially schematic side cross-sectional views of the surge damping portion illustrating stages of a method for damping or otherwise suppressing a surge load using the surge damping portion of Figures 1-2B.

### DETAILED DESCRIPTION

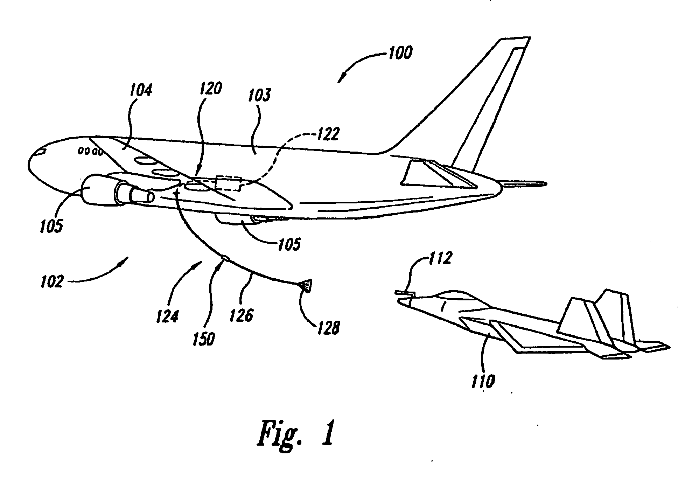

The present disclosure describes systems and methods for reducing surge loads in hose assemblies used in aircraft refueling systems. Certain specific details are set forth in the following description and in Figures 1-3 to provide a thorough understanding of various embodiments of the invention. Well-known structures, systems and methods often associated with such systems have not been shown or described in detail to avoid unnecessarily obscuring the description of the various embodiments of the invention. In addition, those of ordinary skill in the relevant art will understand that additional embodiments of the invention may be practiced without several of the details described below.

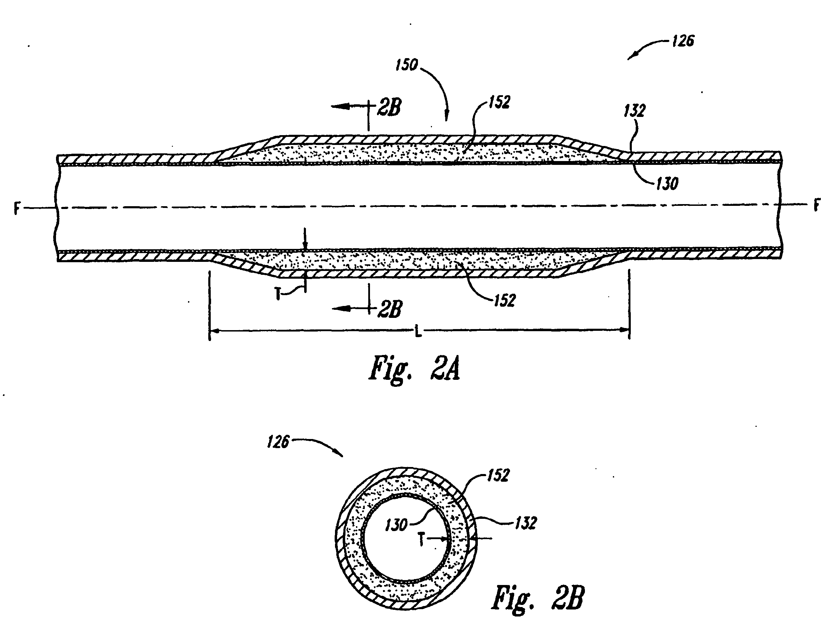

Figure 1 illustrates a system 100 that includes a tanker aircraft 102 positioned to couple with and refuel a receiver aircraft 110 using an aerial refueling device 120 configured in accordance with an embodiment of the invention. The tanker aircraft 102 has a fuselage 103, wings 104, and one or more engines 105 (two are shown in Figure 1 as being carried by the wings 104). In other embodiments, the aircraft 102 can have other configurations. In a particular aspect of the embodiment shown in Figure 1, the aerial refueling device 120 can include an on-board portion 122 (e.g., a hose reel activator and associated valving) and a deployable portion 124. The deployable portion 124 can include a flexible fuel line or hose 126 and a drogue 128. The position of the drogue 128 can be controlled to couple with a probe 112 of the receiver aircraft 110. The hose 126 can include one or more surge damping portions 150 (only one is shown in Figure 1) configured to damp or otherwise suppress surge loads traveling through the hose 126 from the drogue 128 toward the on-board portion 122 of the refueling device 120. Further details of the surge damping portion 150 and associated systems and methods for damping and/or suppressing surge loads are described below with reference to Figures 2A-3.

Figure 2A is an enlarged, partially schematic side cross-sectional view of a portion of the hose 126 and the surge damping portion 150 shown in Figure 1. The hose 126 includes a fluid conduit having an inner portion or layer 130 surrounded by an outer portion or layer 132. The inner and outer layers 130 and 132 of the hose 126 extend along a longitudinal or flow axis F of the hose 126. The inner layer 130 of the hose 126 can be configured to carry fuel or other types of liquids. In several embodiments, for example, the inner layer 130 can include a soft rubber material that acts as a fluid seal. As described in greater detail below, the inner layer 130 is also configured to transmit surge loads into the surge damping portion 150.

The outer layer 132 of the hose 126 is an outer body that can provide a protective shroud or layer around the inner layer 130 in case of a liquid and/or vapor leak in the inner layer 130. Accordingly, the outer layer 132 is generally isolated from fluid communication with the fuel or other liquid in the hose 126. The outer layer 132 can include a rubber material or other suitable material that meets the desired operational requirements for the hose 126 (e.g., flexibility, strength, rigidity, etc.) In other embodiments, the inner layer 130 and/or the outer layer 132 of the hose 126 can be formed from other suitable materials or have other arrangements.

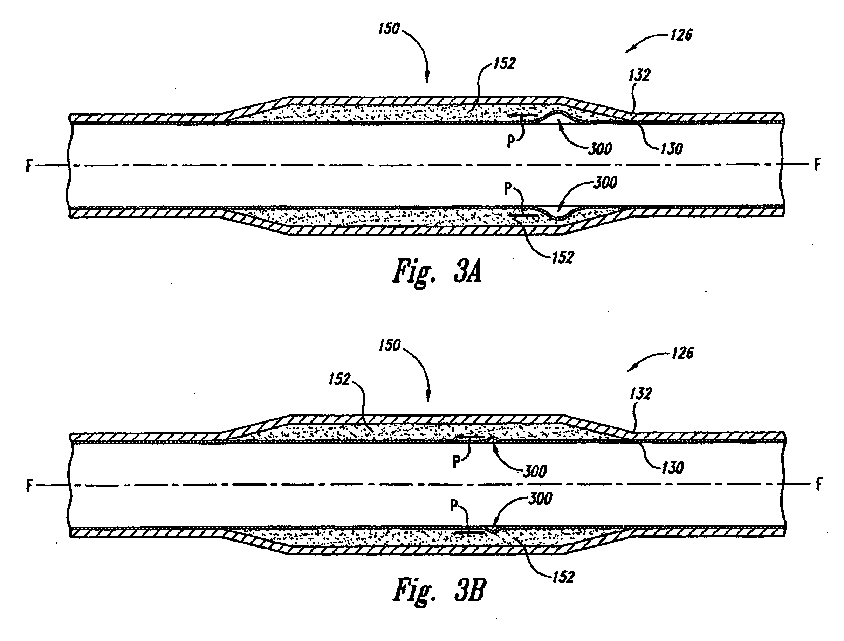

Figure 2B is a cross-sectional view of the hose 126 and the surge damping portion 150 taken along line 2B-2B of Figure 2A. Referring to Figures 2A and 2B together, the surge damping portion 150 can include a compressible material 152 disposed annularly about the hose 126 such that the compressible material 152 is an integral part of the hose 126 between the inner layer 130 and the outer layer 132 of the hose 126. As described in greater detail below with respect to Figures 3A-3C, the compressible material 152 is positioned to absorb energy from a surge load traveling through the hose 126. The compressible material 152 can include solid rubber, foam rubber, silicone rubber, a foam material such as closed-cell foam or other suitable types of foam, or a variety of other suitable materials having the desired damping characteristics.

The compressible material 152 of the surge damping portion 150 can have a durometer value of approximately 10 to 90. The durometer value of the compressible material 152 can vary in accordance with the desired damping characteristics and/or operational requirements for the hose 126 and corresponding surge damping portion 150. Although compressible material 152 having a lower durometer value can improve the damping rate of the surge damping portion 150, the durometer value of the compressible material 152 should not be so low that the material overheats during operation. Furthermore, the durometer value of the compressible material 152 should be sufficient to provide the necessary stiffness to the hose 126 to meet the necessary operational requirements (e.g., flight loads during refueling operations). On the other hand, the durometer value should not be so high that the hose 126 and corresponding surge damping portion 150 are too stiff and/or do not have a desired damping functionality.

In the illustrated embodiment, the surge damping portion 150 has a length L (as shown in Figure 2A) along the hose 126 and a thickness T (shown in both Figures 2A and 2B) between the inner layer 130 and the outer layer 132 of the hose 126. The length L and thickness T of the surge damping portion 150 can be adjusted based on the desired damping characteristics for a particular application. In applications where large surge loads are expected, for example, the length L and/or thickness T can be increased to accommodate the larger loads. On the other hand, in applications where the surge loads are anticipated to be relatively small, the length L and/or thickness T of the surge damping portion 150 can be decreased.

Figures 3A-3C are enlarged, partially schematic side cross-sectional views of the surge damping portion 150 shown in Figures 1-2B illustrating stages of a method for damping or otherwise suppressing a surge load in accordance with an embodiment of the invention. Figure 3A, for example, illustrates a preliminary stage of the method in which a surge pulse or surge load 300 initially reaches the surge damping portion 150 of the hose 126. Surge pulses generated by fuel or other fluids passing through the hose 126, such as the surge pulse 300 in the illustrated embodiment, generally include a radially expanding wave traveling along the hose from the drogue 128 (Figure 1) toward the on-board portion of the refueling device 120 (Figure 1). In the illustrated embodiment, for example, the surge pulse 300 is a wave traveling in a direction generally parallel to the flow axis F of the hose 126 (as shown by the arrows P). In one particular aspect of this embodiment, the inner layer 130 of the hose 126 includes a relatively soft rubber material configured to transmit the surge pulse 300 into the compressible material 152. Accordingly, when the surge pulse 300 reaches the surge damping portion 150 of the hose 126, the surge pulse 300 begins to expand into the compressible material 152 as shown in Figure 3A.

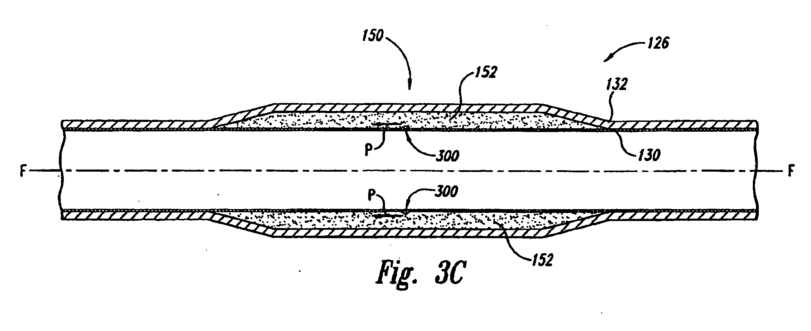

Referring next to Figure 3B, the surge pulse 300 continues to travel in the direction P along the hose 126. As the surge pulse 300 passes through the compressible material 152 of the surge damping portion 150, however, the energy from the surge pulse 300 is transferred to the compressible material 152 as the surge pulse displaces portions of the compressible material. In this way, the energy from the surge pulse 300 is converted to heat and, accordingly, the surge pulse 300 itself begins to shrink or otherwise dissipate. Referring to Figure 3C, for example, the surge pulse 300 has passed through approximately half the length of the surge damping portion 150, and the surge pulse 300 is generally dissipated. As discussed previously, the energy (i.e., heat, pressure, etc.) from the surge pulse 300 can be transferred to the compressible material 152, the hose 126, and/or the fluid (not shown) passing through the hose 126.

One feature of at least some of the embodiments of the surge damping portion 150 described above is that the surge damping portion 150 is relatively light and inexpensive compared with conventional surge suppression systems that can include a series of pumps and tanks to charge the nitrogen-filled canisters, as described previously. An advantage of this feature is that the surge damping portions 150 can significantly decrease the operating weight of the aerial refueling device 120 (Figure 1), which can increase efficiency and reduce the cost of operating the refueling system. Another advantage of this feature is that the complexity of the aerial refueling system is significantly reduced because the surge damping portion 150 does not require any additional tanks, pumps, or controllers for operation.

Another feature of at least some of the embodiments of the surge damping portion 150 described above is that the damping characteristics of the surge damping portion 150 are customizable based on anticipated loading conditions and/or operational conditions. For example, the length L and the thickness T of the compressible material 152 can be adjusted to accommodate a number of different loading conditions. The damping characteristics can be further adjusted by selecting a certain type of material having a desired durometer value for the compressible material 152. An advantage of these features is that a hose for an aerial refueling system (such as the aerial refueling device 120 of Figure 1) can be designed to satisfy a number of different operational conditions. Furthermore, additional hoses with different suppression characteristics can be designed for the system and can be quickly and easily exchanged with the existing hose to accommodate varying operational requirements.

Still another feature of at least some of the embodiments of the surge damping portion 150 described above is that the surge damping portion of the hose 126 is positioned relatively close to the source of the surge loads (e.g., at or proximate to the drogue 128 (Figure 1) at a distal end of the hose 126). An advantage of this feature is that it can be significantly more effective to dampen or otherwise suppress surge loads or surge pulses close to the source of the surge load when the surge load is at or near its peak because it is generally easier to transfer large amounts of energy from large surge loads as opposed to transferring energy from smaller surge loads. For example, a large surge load will generally displace a larger volume of compressible material 152 and, accordingly, transfer more energy from the surge load to the compressible material 152. The surge damping portion 150 proximate to the distal end of the hose 126 is accordingly expected to significantly improve the ability of the system to dampen or otherwise suppress large surge loads as compared with conventional surge suppressors that are positioned within the aircraft a large distance away from the source of the surge loads.

From the foregoing, it will be appreciated that specific embodiments of the invention have been described herein for purposes of illustration, but that various modifications may be made without deviating from the invention. For example, a hose assembly can include any number of surge suppression portions along the hose to reduce surge loads in the hose.

## Claims

1. An aerial refueling system (100) comprising
a tanker aircraft (102) and a fuel delivery device (120) carried by the tanker aircraft, wherein the fuel delivery device includes a deployable portion (124) configured to be deployed overboard the aircraft (102) during aerial refueling, wherein the deployable portion (124) includes:
- at least a portion of a flexible fuel line (126),
- a drogue (128) coupled to the fuel line (126),
**characterized in that**
- the fuel line (126) includes (a) an inner layer (130) positioned to transmit the surge loads into a surge damping portion (150) , and (b) an outer layer (132) disposed annularly about at least a portion of the inner layer (130) and the surge damping portion (150) ;
- the surge damping portion (150) is positioned along the fuel line (126) away from the aircraft (102), the surge damping portion (150) includes a compressible material (152) which is an integral part of the fuel line (126) disposed annularly about at least a portion of the fuel line between the inner layer (130) of the fuel line (126) and the outer layer (132) of the fuel line to dampen radially expanding surge loads traveling along a flow axis of the fuel line (126).

2. The system of claim 1 wherein the fuel delivery device (120) includes a plurality of surge damping portions (150) along the fuel line (126) away from the aircraft (102).

3. The system of claim 1 or 2 wherein the compressible material (152) includes at least one of a solid rubber, foam rubber, silicone rubber, closed-cell foam, and a foam material.

4. The system of any of claims 1 - 3 wherein the compressible material (152) has a durometer value of 10 to 90.

5. A method for refueling an aircraft (110), comprising aerially deploying from a tanker aircraft (102) a portion of a refueling system (100) that includes a flexible fuel line (126) and a drogue (128) , **characterized by** suppressing surge loads traveling along the fuel line (126) using a surge damping portion (150) positioned along at least a portion of the fuel line (126) away from the tanker aircraft, wherein suppressing surge loads traveling along the fuel line (126) using a surge damping portion (150) includes transferring energy from radially expanding surge loads into a compressible material (152) which is an integral part of the fuel line (126) disposed radially about at least a portion of the fuel line (126).

6. The method of claim 5 wherein transferring energy from radially expanding surge loads into a compressible material (152) includes transferring energy from the surge loads into a compressible material (152) including at least one of a solid rubber, foam rubber, silicone rubber, closed-cell foam, and a foam material.

7. The method of claim 5 or 6 wherein suppressing surge loads traveling along the fuel line using a surge damping portion (150) includes suppressing surge loads using a plurality of surge damping portions (150) positioned along the fuel line (126) away from the aircraft (102).

## Patentansprüche

1. System (100) zur Betankung in der Luft, umfassend ein Tankerluftfahrzeug (102) und eine vom Tankerluftfahrzeug getragene Treibstoffzuleitungsvorrichtung (120), wobei die Treibstoffzuleitungsvorrichtung einen ausfahrbaren Abschnitt (124) beinhaltet, der ausgebildet ist, um während des Betankens in der Luft über Bord des Luftfahrzeugs (102) ausgefahren zu werden, wobei der ausfahrbare Abschnitt (124) beinhaltet:
- zumindest einen Abschnitt einer flexiblen Treibstoffleitung (126),
- einen an die Treibstoffleitung (126) gekoppelten Fangtrichter (128),
**dadurch gekennzeichnet, dass**
- die Treibstoffleitung (126) beinhaltet (a) eine innere Schicht (130), die positioniert ist, um die Druckspitzen in einen Spitzendämpfungsabschnitt (150) zu übertragen, und (b) eine äußere Schicht (132), die ringförmig um zumindest einen Abschnitt der inneren Schicht (130) und des Spitzendämpfungsabschnitts (150) angeordnet ist;
- der Spitzendämpfungsabschnitt (150) entlang der Treibstoffleitung (126) fern vom Luftfahrzeug (102) positioniert ist, der Spitzendämpfungsabschnitt (150) ein zusammendrückbares Material (152) beinhaltet, das ein integraler Teil der Treibstoffleitung (126) ist, der ringförmig um zumindest einen Abschnitt der Treibstoffleitung zwischen der inneren Schicht (130) der Treibstoffleitung (126) und der äußeren Schicht (132) der Treibstoffleitung angeordnet ist, um sich radial ausbreitende Druckspitzen zu dämpfen, die sich entlang einer Flussachse der Treibstoffleitung (126) fortbewegen.

2. System nach Anspruch 1, wobei die Treibstoffzuleitungsvorrichtung (120) eine Mehrzahl von Spitzendämpfungsabschnitten (150) entlang der Treibstoffleitung (126) fern vom Luftfahrzeug (102) beinhaltet.

3. System nach Anspruch 1 oder 2, wobei das zusammendrückbare Material (152) von einem Vollgummi, einem Schaumgummi, einem Silikongummi, einem geschlossenzelligen Schaum und einem Schaummaterial zumindest eins beinhaltet.

4. System nach einem der Ansprüche 1 - 3, wobei das zusammendrückbare Material (152) einen Härtemesserwert von 10 bis 90 aufweist.

5. Verfahren zur Betankung eines Luftfahrzeugs (110), umfassend, dass in der Luft aus einem Tankerluftfahrzeug (102) ein Abschnitt eines Betankungssystems (100) ausgefahren wird, der eine flexible Treibstoffleitung (126) und einen Fangtrichter (128) beinhaltet, **gekennzeichnet durch** das Unterdrücken sich entlang der Treibstoffleitung (126) fortbewegender Druckspitzen mittels eines Spitzendämpfungsabschnitts (150), der entlang zumindest einem Abschnitt der Treibstoffleitung (126) fern vom Tankerluftfahrzeug positioniert ist, wobei das Unterdrücken sich entlang der Treibstoffleitung (126) fortbewegender Druckspitzen mittels eines Spitzendämpfungsabschnitts (150) das Übertragen von Energie aus sich radial ausbreitenden Druckspitzen in ein zusammendrückbares Material (152) einschließt, das ein integraler Teil der Treibstoffleitung (126) ist, der radial um zumindest einen Abschnitt der Treibstoffleitung (126) angeordnet ist.

6. Verfahren nach Anspruch 5, wobei das Übertragen von Energie aus sich radial ausbreitenden Druckspitzen in ein zusammendrückbares Material (152) das Übertragen von Energie aus den Druckspitzen in ein zusammendrückbares Material (152) einschließt, das von einem Vollgummi, einem Schaumgummi, einem Silikongummi, einem geschlossenzelligen Schaum und einem Schaummaterial zumindest eins beinhaltet.

7. Verfahren nach Anspruch 5 oder 6, wobei das Unterdrücken sich entlang der Treibstoffleitung fortbewegender Druckspitzen mittels eines Spitzendämpfungsabschnitts (150) das Unterdrücken von Druckspitzen mittels einer Mehrzahl von Spitzendämpfungsabschnitten (150) einschließt, die entlang der Treibstoffleitung (126) fern vom Luftfahrzeug (102) positioniert sind.

## Revendications

1. Système de ravitaillement en vol (100), comprenant un avion-citerne (102) et un dispositif d'amenée de combustible (120) porté par l'avion-citerne, dans lequel le dispositif d'amenée de combustible comprend une partie déployable (124) configurée pour être déployée vers l'extérieur de l'avion (102) au cours d'un ravitaillement en vol, dans lequel la partie déployable (124) comprend :
- au moins une partie d'une conduite à combustible souple (126),
- un cône (128) couplé à la conduite à combustible (126) ;
**caractérisé en ce que**
- la conduite à combustible comprend (a) une couche intérieure (130) disposée de manière à transmettre les coups de bélier vers une partie d'amortissement des coups de bélier (150), et (b) une couche extérieure (134) disposée de manière annulaire autour d'au moins une partie de la couche intérieure (130) et de la partie d'amortissement des coups de bélier (150) ;
- la partie d'amortissement des coups de bélier (150) est disposée le long de la conduite à combustible (126) à l'écart de l'avion (102), la partie d'amortissement des coups de bélier (150) comprend un matériau compressible (152) disposé de manière annulaire autour d'au moins une partie de la conduite à combustible entre la couche intérieure (130) de la conduite à combustible (126) et la couche extérieure (134) de la conduite à combustible afin d'amortir les coups de bélier à expansion radiale se propageant le long d'un axe d'écoulement de la conduite à combustible (126).

2. Système selon la revendication 1, dans lequel le dispositif d'amenée de combustible (120) comprend une pluralité de parties d'amortissement des coups de bélier (150) le long de la conduite à combustible (126) à l'écart de l'avion (102).

3. Système selon la revendication 1 ou 2, dans lequel le matériau compressible (152) est constitué par un caoutchouc plein et/ou une mousse de caoutchouc et/ou un caoutchouc de silicone et/ou une mousse cellulaire et/ou un matériau à consistance mousse.

4. Système selon l'une quelconque des revendications 1 à 3, dans lequel le matériau compressible (152) a une valeur de dureté allant de 10 à 90.

5. Procédé de ravitaillement d'un avion (110), comprenant :
le déploiement en vol, depuis un avion-citerne (102), d'une partie d'un système de ravitaillement (100) comprenant une conduite à combustible souple (126) et un cône (128),
**caractérisé par** la suppression des coups de bélier se propageant le long de la conduite à combustible (126) au moyen d'une partie d'amortissement des coups de bélier (150) disposée le long d'au moins une partie de la conduite à combustible (126) à l'écart de l'avion-citerne, dans lequel la suppression des coups de bélier se propageant le long de la conduite à combustible (126) au moyen d'une partie d'amortissement des coups de bélier (150) comprend le transfert de l'énergie provenant des coups de bélier en expansion radiale vers un matériau compressible (152) formant partie intégrante de la conduite à combustible (126) et disposé radialement autour d'au moins une partie de la conduite à combustible (126).

6. Procédé selon la revendication 5, dans lequel le transfert de l'énergie provenant des coups de bélier en expansion radiale vers un matériau compressible (152) comprend le transfert de l'énergie provenant des coups de bélier vers un matériau compressible (152) constitué d'un caoutchouc plein et/ou d'une mousse de caoutchouc et/ou d'un caoutchouc de silicone et/ou d'une mousse cellulaire et/ou d'un matériau à consistance mousse.

7. Procédé selon la revendication 5 ou 6, dans lequel la suppression des coups de bélier se propageant le long de la conduite à combustible au moyen d'une partie d'amortissement des coups de bélier (150) comprend la suppression des coups de bélier au moyen d'une pluralité de parties d'amortissement des coups de bélier (150) disposées le long de la conduite à combustible (126) à l'écart de l'avion (102).
